# EUROPEAN PATENT APPLICATION

(11) **EP 4 848 662 A1**
(43) Date of publication of application: **02.12.2026**
(21) Application number: 26180650.9
(22) Date of filing: 22.05.2026
(51) Int. Cl.: H04L 9/40, G06F 21/60, G06F 21/72, G06F 21/85

(54) **MODULAR CRYPTOGRAPHIC COMMUNICATION SYSTEM**

(30) Priority: 29.05.2025 US 202519222915
(71) Applicant: ViaSat Inc., Carlsbad CA 92009 (US)
(72) Inventor: Suszczynski, Theodore A, Carlsbad, 92009 (US); Davee, Peter J, Carlsbad, 92009 (US); Christensen, Gary G, Carlsbad, 92009 (US); Hoffman, Tyler T, Carlsbad, 92009 (US)
(74) Representative: Swindell & Pearson Limited

(57) **Abstract**

Described herein are cryptographic communication systems with a cryptographic core device that couples to a first modular adapter that interfaces with a ciphertext network and to a second modular adapter that interfaces with a plaintext network. Each modular adapter can be swapped with a different modular adapter to provide desired variety in available adapter interfaces. The cryptographic core device includes a tamper boundary. Swapping modular adapters does not trigger the breach condition of the tamper boundary. The cryptographic core device includes a plurality of signal interfaces that couple to a corresponding interface of the modular adapter to provide desired cryptographic functionality using one or more cryptographic modules housed within the cryptographic core device. Thus, the disclosed technologies preserve the tamper boundary while switching physical interfaces via the disclosed modular communication adapters.

## Description

### BACKGROUND

### Field

The present disclosure generally relates to cryptographic communication systems.

### Description of Related Art

Secure communication forms the backbone of many industries. To support secure communications, many standards have been developed that dictate protocols and measures that need to be implemented to satisfy different cryptographic requirements. In high-assurance environments, security standards have been developed for encrypting and securing internet protocol (IP) traffic. Examples include devices used to provide end-to-end encryption, ensuring secure communications over both secure (e.g., plaintext) and open (e.g., ciphertext) networks.

### SUMMARY

According to a number of implementations, the present disclosure relates to a cryptographic communication system that includes a first communication adapter for connecting to a ciphertext network, the first communication adapter having a housing, an outer I/O connector configured to connect to the ciphertext network, and an inner I/O connector that partially protrudes from the housing on a side opposite the outer I/O connector. The cryptographic communication system also includes a second communication adapter for connecting to a plaintext network, the second communication adapter having a housing, an outer I/O connector configured to connect to the plaintext network, and an inner I/O connector that partially protrudes from the housing on a side opposite the outer I/O connector. The cryptographic communication system also includes a cryptographic core device comprising an enclosure forming a first adapter receptacle to interface with the first communication adapter and a second adapter receptacle to interface with the second communication adapter, each of the first adapter receptacle and the second adapter receptacle including a physical opening through which respective inner I/O connectors pass; a plurality of first signal converters housed within the enclosure and configured to connect to the inner I/O connector of the first communication adapter when the first communication adapter is mated with the first adapter receptacle; a plurality of second signal converters housed within the enclosure and configured to connect to the inner I/O connector of the second communication adapter when the second communication adapter is mated with the second adapter receptacle; a cryptographic module housed within the enclosure, the cryptographic module configured to provide cryptographic functionality to the cryptographic core device by encrypting and decrypting data signals between the plurality of first signal converters and the plurality of second signal converters; and a tamper boundary comprising a detectable boundary that triggers a breach condition responsive to unauthorized penetration of the detectable boundary. The first communication adapter is configured such that physically coupling the first communication adapter to the cryptographic core device causes the inner I/O connector of the first communication adapter to connect to a particular first signal converter of the plurality of first signal converters, the particular first signal converter compatible with a communication protocol of the first communication adapter. The second communication adapter is configured such that physically coupling the second communication adapter to the cryptographic core device causes the inner I/O connector of the second communication adapter to connect to a particular second signal converter of the plurality of second signal converters, the particular second signal converter compatible with a communication protocol of the second communication adapter. Coupling or decoupling the first communication adapter and the second communication adapter to the cryptographic core device does not trigger the breach condition of the tamper boundary.

According to a number of implementations, the present disclosure relates to a cryptographic communication assembly that includes a plurality of communication adapters each having a housing, an outer I/O connector configured to connect to a network, and an inner I/O connector that partially protrudes from the housing on a side opposite the outer I/O connector, each of the plurality of communication adapters configured for a different type of signal. The cryptographic communication assembly also includes a cryptographic core device comprising an enclosure forming a first adapter receptacle and a second adapter receptacle, each of the first adapter receptacle and the second adapter receptacle including a physical opening through which respective inner I/O connectors pass and configured to interface with any of the plurality of communication adapters; a plurality of first signal converters housed within the enclosure and configured to connect to an inner I/O connector of a communication adapter of the plurality of communication adapters when the communication adapter is mated with the first adapter receptacle; a plurality of second signal converters housed within the enclosure and configured to connect to an inner I/O connector of a communication adapter of the plurality of communication adapters when the communication adapter is mated with the second adapter receptacle; a cryptographic module housed within the enclosure, the cryptographic module configured to provide cryptographic functionality to the cryptographic core device by encrypting and decrypting data signals between the plurality of first signal converters and the plurality of second signal converters; and a tamper boundary comprising a detectable boundary that triggers a breach condition responsive to unauthorized penetration of the detectable boundary. Each communication adapter is configured such that physically coupling a communication adapter to the cryptographic core device causes the respective inner I/O connector to connect to a particular signal converter of the plurality of first signal converters or the plurality of second signal converters. Coupling or decoupling a communication adapter of the plurality of communication adapters to the cryptographic core device does not trigger the breach condition of the tamper boundary.

According to a number of implementations, the present disclosure relates to a method for assembling a cryptographic communication system using interchangeable communication adapters. The method includes selecting a first communication adapter having a housing, an outer I/O connector configured to connect to a ciphertext network, and an inner I/O connector. The method also includes selecting a second communication adapter having a housing, an outer I/O connector configured to connect to a plaintext network, and an inner I/O connector. The method also includes coupling the first communication adapter to a first adapter receptacle of a cryptographic core device, thereby coupling the inner I/O connector of the first communication adapter to a particular first signal converter of a plurality of first signal converters of the cryptographic core device. The method also includes coupling the second communication adapter to a second adapter receptacle of the cryptographic core device, thereby coupling the inner I/O connector of the second communication adapter to a particular second signal converter of a plurality of second signal converters of the cryptographic core device. The first communication adapter is configured such that physically coupling the first communication adapter to the cryptographic core device causes the respective inner I/O connector to connect to the particular first signal converter of the plurality of first signal converters. The second communication adapter is configured such that physically coupling the second communication adapter to the cryptographic core device causes the respective inner I/O connector to connect to the particular second signal converter of the plurality of second signal converters. Coupling or decoupling the first communication adapter and the second communication adapter to the cryptographic core device does not trigger a breach condition of a tamper boundary of the cryptographic core device.

For purposes of summarizing the disclosure, certain aspects, advantages and novel features have been described herein. It is to be understood that not necessarily all such advantages may be achieved in accordance with any particular embodiment. Thus, the disclosed embodiments may be carried out in a manner that achieves or optimizes one advantage or group of advantages as taught herein without necessarily achieving other advantages as may be taught or suggested herein.

### BRIEF DESCRIPTION OF THE DRAWINGS

FIG. 1 illustrates an example communications network that includes a cryptographic communication system with a first communication adapter that interfaces with a ciphertext network and a second communication adapter that interfaces with a plaintext network.
FIG. 2 illustrates an example cryptographic communication system that includes a cryptographic core device with a tamper boundary and two modular communication adapters that respectively communicate with a ciphertext network and a plaintext network.
FIG. 3 illustrates an example of a modular cryptographic communication system that includes a cryptographic core device with a tamper boundary, the cryptographic core device configured to interface with a plurality of plaintext communication adapters and a plurality of ciphertext communication adapters.
FIG. 4 illustrates an example of modular communication adapters interfacing with signal converters within a cryptographic core device in such a way as to not trigger a breach condition of a tamper boundary of the cryptographic core device.
FIGS. 5A, 5B, and 5C illustrate examples of modular communication adapters connecting to targeted signal converters within cryptographic core devices described herein.
FIGS. 6A, 6B, and 6C illustrate additional examples of modular communication adapters connecting to targeted signal converters within cryptographic core devices described herein.
FIGS. 7A, 7B, and 7C illustrate examples of modular communication adapters for use with the cryptographic communication systems described herein.
FIGS. 8A and 8B illustrate an exploded view of an example modular communication adapter.
FIG. 9 illustrates an example cryptographic communication system that includes a cryptographic core device interfacing with a first communication adapter and a second communication adapter.
FIG. 10 illustrates an example method for configuring a cryptographic communication system.
FIG. 11 illustrates an example method for configuring and reconfiguring a cryptographic communication system.

### DETAILED DESCRIPTION OF SOME EMBODIMENTS

The headings provided herein, if any, are for convenience only and do not necessarily affect the scope or meaning of the claimed subject matter.

### Overview

The purpose of encrypted communication is to protect sensitive data, ensure privacy, and prevent unauthorized access across networks. Encrypted communications can provide a number of commercial advantages including, for example, preventing eavesdropping on financial transactions, corporate communications, and personal data as well as protecting intellectual property and trade secrets. Encrypted communications can also protect against cyber threats such as hackers, man-in-the-middle attacks, and data breaches and can also be used to protect SCADA and ICS systems in critical infrastructure (e.g., power grids, factories, etc.). Encrypted communications can also be used in secure remote work environments as well as cloud computing environments, which enables safe collaboration and data sharing between people that are physically separated from one another. As used herein, encrypted communications and/or cryptographic communication can refer to the encryption of data in transit (e.g., transmitting and receiving encrypted data).

Cryptographic communication can be accomplished using a number of different encryption algorithms and protocols. In conjunction with such algorithms and protocols, security standards can be developed by various technological organizations or government agencies. Other security standards may also be used to ensure robust encryption to protect data as it moves across or between networks. Security standards can employ a variety of encryption standards such as, for example and without limitation, AES (Advanced Encryption Standard), CRYSTALS-Kyber, and CRYSTALS-Dilithium.

To comply with certain security standards, a communications device may also be required to include physical security measures. By way of example, some security standards require that a device include tamper resistance and zeroization features (e.g., erasing cryptographic keys in case of compromise). In some instances, security standards require that only authorized personnel can access, handle, and use encryption devices and cryptographic keys to maintain the security qualification of the associated device.

Cryptographic devices can use a variety of communication adapters to enhance the functionality of the device. Certain devices are configured so that they contain approved encryption algorithms and these items may be controlled due to their role in protecting sensitive communications. In contrast, certain devices and adapters are not strictly controlled and can be configured to interface with cryptographic systems because such devices and adapters do not themselves contain encryption algorithms, keys, or cryptographic logic. These adapters can be used to connect the more strictly controlled devices to external networks or to equipment without compromising encryption functions. Such adapters include, for example and without limitation, power adapters, ethernet media converters, or docking stations that provide connectivity without handling cryptographic functions. These adapters can be used in systems where encryption occurs separately within a controlled device. For example, a network adapter can be used to connect an encryption device to a plaintext network. The use of such adapters advantageously reduces security handling requirements since they do not contain cryptographic material, allows interoperability with non-secure or commercial systems while maintaining security boundaries, and eases logistics and procurement. Examples of such adapters or connectors include, for example and without limitation, RJ45, MIL, LR FIBER, and SR FIBER.

To cover a variety of implementations and use cases, cryptographic devices can use different combinations of adapters. For example, cryptographic devices can use two adapters: one to interface with a ciphertext network and one to interface with a plaintext network. Where it is desirable to provide a variety of adapters, this can lead to a large number of different devices to cover each of the different desirable configurations.

Accordingly, described herein are cryptographic communication systems with a cryptographic core device that couples to a first modular adapter that interfaces with a ciphertext network and to a second modular adapter that interfaces with a plaintext network. Each modular adapter can be swapped with a different modular adapter to provide desired variety in available adapter interfaces. The cryptographic core device includes a tamper boundary. Swapping modular adapters does not trigger the breach condition of the tamper boundary. The cryptographic core device includes a plurality of signal interfaces that couple to a corresponding interface of the modular adapter to provide desired cryptographic functionality using one or more cryptographic modules housed within the cryptographic core device. Thus, the disclosed technologies preserve the tamper boundary while switching physical interfaces via the disclosed modular communication adapters.

Advantageously, this reduces the number of different cryptographic core devices that need to be produced to cover the different implementations that provide different adapter interfaces (e.g., through different adapters). Additionally, the disclosed technologies enable qualified personnel to modify the interfaces of a cryptographic communication system without triggering a breach condition of the tamper boundary of the cryptographic core device. For example, a generic or blank cryptographic core device can be configured at a depot and a qualified person adds two modular adapters to the cryptographic core device to provide a cryptographic communication system with targeted cryptographic functionality to provide secure communication over particular communications networks. Advantageously, the different device configurations can use the same power supply. Advantageously, the different device configurations can fit into the same hardware and/or racks (e.g., an exoskeleton).

The disclosed technologies provide a customizable cryptographic communication system that includes a core cryptographic device and a set of selectable and swappable adapters for one of each of a plurality of different external signal types. The cryptographic system facilitates easy configuration of a new device by merely selecting the adapters that correspond to the desired signal type(s). The disclosed technologies also facilitate reconfiguring an existing device for different signal type(s). The configuration and reconfiguration can be done without disturbing the tamper boundary. Thus, there is no need to recertify the cryptographic module(s) inside the tamper boundary (e.g., housed within the cryptographic core device) after configuration and/or reconfiguration. This beneficially provides a flexible cryptographic communication system that can replace a number of hardwired communication systems. Moreover, the disclosed technologies reduce the number of different hardwired configurations that would be required to maintain in inventory to cover the variety of use cases that may be faced. Furthermore, the disclosed technologies provide customers with the ability to customize and configure their cryptographic communication systems as desired. In some implementations, the modular adapters can be provided in a variety of designs that mirror available adapter options (e.g., RJ45, MIL, LR FIBER, SR FIBER, etc.).

In some implementations, the disclosed cryptographic communication systems provide encryption for sensitive data. In some implementations, the disclosed systems can be housed using compact, rugged designs for tactical and mobile use. In some implementations, the disclosed systems can support a variety of IP protocols including IPv4 and IPv6 networks with low latency. In some implementations, the disclosed systems can provide high-speed performance (e.g., gigabit-speed performance) for high-bandwidth applications. In some implementations, the disclosed systems can be used to ensure secure voice, video, and data transmission across strategic and tactical environments.

### Cryptographic Communication Systems

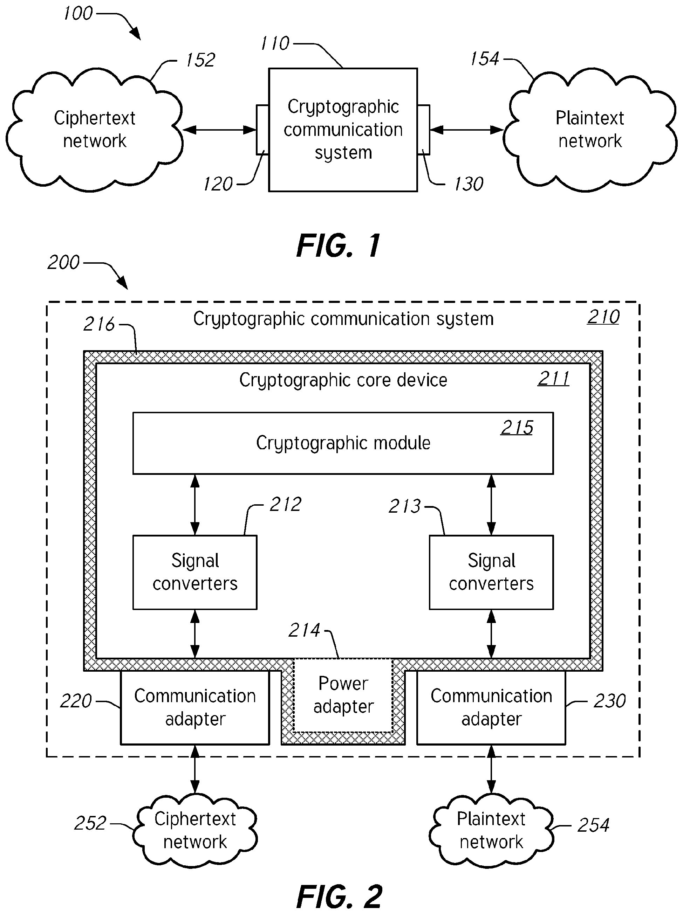

FIG. 1 illustrates an example of a communications network 100 that includes a cryptographic communication system 110 with a first communication adapter 120 that interfaces with a ciphertext network 152 and a second communication adapter 130 that interfaces with a plaintext network 154. When the first communication adapter 120 is coupled to the cryptographic communication system 110 it is configured to enable the transmission of encrypted data over the ciphertext network 152. Similarly, when the second communication adapter 130 is coupled to the cryptographic communication system 110 it is configured to enable the transmission of plain data (e.g., unencrypted data) over the plaintext network 154. It should be noted that the first communication adapter 120 can be coupled to the plaintext network 154 and the cryptographic communication system 110 so that it enables the transmission of plain data over the plaintext network 154. Similarly, it should be noted that the second communication adapter 130 can be coupled to the ciphertext network 152 and the cryptographic communication system 110 so that it enables the transmission of encrypted data over the ciphertext network 152. As described in greater detail herein, the first communication adapter 120 and the second communication adapter 130 can be configured so that each provides the desired functionality of transmitting encrypted data or plain data depending at least in part on how or where it is coupled to the cryptographic communication system 110. The first communication adapter 120 and the second communication adapter 130 are thus configured to pass plaintext or ciphertext signals to and from the cryptographic communication system 110 and the functionality provided by the respective communication adapter 120, 130 depends at least in part on a signal converter within the cryptographic communication system 110 to which the communication adapter 120, 130 connects, as described in greater detail herein.

The first communication adapter 120 can be a modular communication adapter that can be replaced with another modular communication adapter to change the adapter interface or connector type and/or to change the signal type passed to and from the cryptographic communication system 110. Similarly, the second communication adapter 130 can be a modular communication adapter that can be replaced with another modular communication adapter to change the adapter interface or connector type and/or to change the signal type passed to and from the cryptographic communication system 110. In some implementations, the first communication adapter 120 and the second communication adapter 130 do not include any cryptographic functionality within the adapter. To provide desired cryptographic functionality, then, the first communication adapter 120 and the second communication adapter 130 connect to targeted signal converters within the cryptographic communication system 110 which in turn communicate with one or more cryptographic modules within the cryptographic communication system 110.

The communications network 100 can be any suitable communications network such as a satellite network, a terrestrial network, a cellular network, a wired network, a wireless network, or any combination of these. The cryptographic communication system 110 can be configured to provide secure or encrypted communication between the ciphertext network 152 and the plaintext network 154. The cryptographic communication system 110 is configured to provide targeted encryption and decryption functionalities to enable secure communication between the ciphertext network 152 and the plaintext network 154.

FIG. 2 illustrates an example cryptographic communication system 210 that includes a cryptographic core device 211 with a tamper boundary 216 and two modular communication adapters (a first modular communication adapter 220 and a second modular communication adapter 230) that respectively communicate with a ciphertext network 252 and a plaintext network 254 in a communications network 200. The communications network 200 is similar to the communications network 100 of FIG. 1. Similarly, the cryptographic communication system 210 is similar to the cryptographic communication system 110 of FIG. 1.

The cryptographic communication system 210 includes the cryptographic core device 211 and the first modular communication adapter 220 to communicate with the ciphertext network 252 and the second modular communication adapter 230 to communicate with the plaintext network 254. The cryptographic core device 211 also includes a power adapter 214 that provides power to the first modular communication adapter 220, the second modular communication adapter 230, and components of the cryptographic core device 211. Components of the cryptographic core device 211 include at least one cryptographic module 215, a plurality of first signal converters 212, and a plurality of second signal converters 213.

The plurality of first signal converters 212 is configured to communicate with the first modular communication adapter 220 to transmit signals to and to receive signals from the ciphertext network 252. These signals are converted using a selected or targeted signal converter of the plurality of first signal converters 212 to which the first modular communication adapter 220 connects. Similarly, the plurality of second signal converters 213 is configured to communicate with the second modular communication adapter 230 to transmit signals to and to receive signals from the plaintext network 254. These signals are converted using a selected or targeted signal converter of the plurality of second signal converters 213 to which the second modular communication adapter 230 connects. The at least one cryptographic module 215 communicates with the plurality of first signal converters 212 and the plurality of second signal converters 213. The at least one cryptographic module 215 performs cryptographic functions or operations on the signals received from the plurality of first signal converters 212 (e.g., through the first modular communication adapter 220) and/or the plurality of second signal converters 213 (e.g., through the second modular communication adapter 230).

The cryptographic core device 211 includes the tamper boundary 216 which operates as a physical boundary to detect, prevent, and/or react to tampering with the cryptographic communication system 210. The tamper boundary 216 can provide a physical element that makes it difficult for attackers to gain access to sensitive information contained in the cryptographic core device 211. The tamper boundary 216 can conform to security standards. For example, a standard may require that a cryptographic core device, such as the cryptographic core device 211, employ physical security mechanisms to restrict unauthorized physical access to the contents of the device and to deter unauthorized use or modification of the device and that hardware, software, and data components within the tamper boundary 216 be protected. Thus, the tamper boundary 216 is configured such that unauthorized attempts at physical access, use, or modification have a high probability of being detected. This can be accomplished through tamper evidence and/or a tamper response. Tamper evidence can include leaving visible signs of tampering responsive to an attempt to gain unauthorized access to the cryptographic core device 211. A tamper response can include taking immediate actions during an attempt to gain unauthorized access to the cryptographic core device 211. Tamper responses can include actions to protect sensitive information and data such as making retrieval of such information impossible.

Thus, the tamper boundary 216 can be a detectable boundary where a penalty is imposed if unauthorized penetration occurs. In some implementations, the tamper boundary 216 includes a physical boundary or envelope such as a tamper detection envelope. Tampering with the tamper boundary 216 in such instances can result in a tamper response such as zeroization (e.g., erasing data and information of consequence or all data and information). In some implementations, the cryptographic core device 211 includes zeroization circuitry that is triggered as part of a tamper response, and the zeroization circuitry is configured to zeroize all sensitive plaintext and private keys responsive to the triggering of a breach condition of the tamper boundary 216. Another example tamper response includes the cryptographic core device 211 ceasing to operate. Another example tamper response includes the cryptographic core device 211 being cleared of operational data so that the cryptographic core device 211 or the at least one cryptographic module 215 ceases to operate. Another tamper response can include, for example, that the cryptographic core device 211 be returned to a depot for reconstitution and repair. For other typical cryptographic communication devices, this makes it so that a user cannot modify the cryptographic communication system in the field whereas the cryptographic communication system 210 with the first modular communication adapter 220 and the second modular communication adapter 230 enables a user to modify the cryptographic communication system 210 in the field without triggering a breach condition of the tamper boundary 216. In other words, communication adapters can be swapped to modify operation of the cryptographic communication system 210 without incurring a tamper response, which is an advantage of the cryptographic communication system 210 relative to typical cryptographic communication systems.

The cryptographic communication system 210 thus includes the first modular communication adapter 220 for connecting to the ciphertext network 252. By connecting with a targeted signal converter of the plurality of first signal converters 212, the first modular communication adapter 220 enables communication with the ciphertext network 252. The cryptographic communication system 210 also includes the second modular communication adapter 230 for connecting to the plaintext network 254. By connecting with a targeted signal converter of the plurality of second signal converters 213, the second modular communication adapter 230 enables communication with the plaintext network 254.

The cryptographic communication system 210 also includes the cryptographic core device 211. The cryptographic core device 211 includes the plurality of first signal converters 212 configured to connect to the first modular communication adapter 220. The cryptographic core device 211 includes the plurality of second signal converters 213 configured to connect to the second modular communication adapter 230. The cryptographic core device 211 includes the at least one cryptographic module 215 configured to provide cryptographic functionality to the cryptographic core device 211 by encrypting and decrypting data signals between the plurality of first signal converters 212 and the plurality of second signal converters 213. The cryptographic core device 211 includes the power adapter 214. The cryptographic core device 211 also includes the tamper boundary 216 comprising a detectable boundary that triggers a breach condition responsive to unauthorized penetration of the detectable boundary.

The first modular communication adapter 220 is configured such that physically coupling the first modular communication adapter 220 to the cryptographic core device 211 causes the first modular communication adapter 220 to physically connect to a particular first signal converter of the plurality of first signal converters 212, the particular first signal converter compatible with a communication protocol of the first modular communication adapter 220. The second modular communication adapter 230 is configured such that physically coupling the second modular communication adapter 230 to the cryptographic core device 211 causes the second modular communication adapter 230 to physically connect to a particular second signal converter of the plurality of second signal converters 213, the particular second signal converter compatible with a communication protocol of the second modular communication adapter 230. In some implementations, the first modular communication adapter 220 and/or the second modular communication adapter 230 do not provide cryptographic functionality. Thus, by way of example, the first modular communication adapter 220 and the second modular communication adapter 230 can be swapped so that the cryptographic communication system 210 operates differently due at least in part to the different signal converters of the plurality of first signal converters 212 and the plurality of second signal converters 213 that connect to the second modular communication adapter 230 and the first modular communication adapter 220, respectively.

Physically coupling the first modular communication adapter 220 and the second modular communication adapter 230 to the cryptographic core device 211 so that the adapters physically connect to the targeted signal converters of the plurality of first signal converters 212 and the plurality of second signal converters 213, respectively, does not trigger the breach condition of the tamper boundary 216. Similarly, decoupling the first modular communication adapter 220 or the second modular communication adapter 230 from the cryptographic core device 211 does not trigger the breach condition of the tamper boundary 216. That is, the tamper boundary 216 is preserved while switching physical interfaces when swapping the first modular communication adapter 220 and/or the second modular communication adapter 230. This enables users in the field to modify and to adapt interfaces for different scenarios without requiring the users to return to a depot and without requiring the use of special equipment to re-enable the cryptographic communication system 210 after changing the interfaces (e.g., changing the first modular communication adapter 220 and/or the second modular communication adapter 230). In some implementations, the signal type of the first modular communication adapter 220 coupled to the cryptographic core device 211 can be the same or different from the signal type of the second modular communication adapter 230 coupled to the cryptographic core device 211. In some implementations, decoupling a communication adapter from the cryptographic core device triggers a maintenance notification. In various implementations, coupling a communication adapter to the cryptographic core device does not trigger a maintenance notification.

In some implementations, the first modular communication adapter 220 and the second modular communication adapter 230 enable data isolation between encrypted and decrypted (or unencrypted) data. In some implementations, the power adapter 214 is a physical barrier between the first modular communication adapter 220 and the second modular communication adapter 230. In such implementations, running a signal connector between the adapters without violating the tamper boundary 216 is difficult or impossible, thereby maintaining the security of the cryptographic communication system 210. In some implementations, the power adapter 214 forms a protrusion to physically separate the first modular communication adapter 220 from the second modular communication adapter 230 when connected to the cryptographic core device 211.

### Cryptographic Communication Assemblies

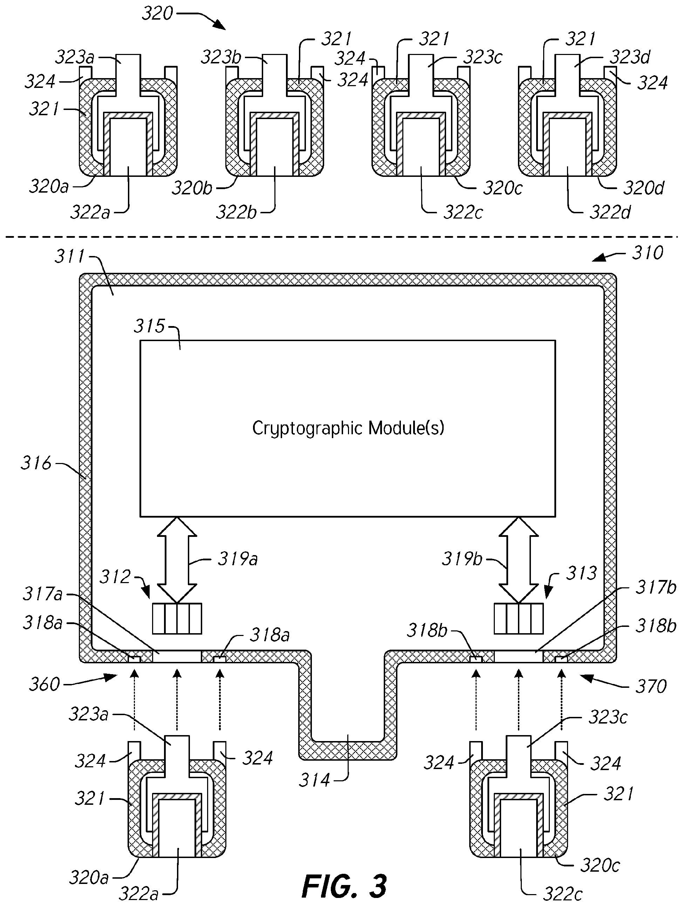

FIG. 3 illustrates an example of a modular cryptographic communication system 310 that includes a cryptographic core device 311 with a tamper boundary 316, the cryptographic core device 311 configured to interface with a plurality of communication adapters 320. The combination of the cryptographic core device 311 with a first communication adapter (e.g., the communication adapter 320a) and a second communication adapter (e.g., the communication adapter 320c) forms the modular cryptographic communication system 310. To create or modify a functioning cryptographic communication system using the modular cryptographic communication system 310, any of the plurality of communication adapters 320 can be selected and attached to the cryptographic core device 311.

The tamper boundary 316 is a detectable boundary that triggers a breach condition responsive to unauthorized penetration of the detectable boundary. The cryptographic core device 311 can adapt or modify its functionality by exchanging one or more of the plurality of communication adapters 320. This can be done without triggering a breach condition of the tamper boundary 316.

Each communication adapter of the plurality of communication adapters 320 includes a housing 321 and an attachment/alignment mechanism 324. The attachment/alignment mechanism 324 is configured to interface with a corresponding attachment/alignment mechanism 318a, 318b of the cryptographic core device 311. The attachment/alignment mechanism 318a, 318b is configured so as to not penetrate, pierce, or extend through the tamper boundary 316, thereby maintaining the integrity of the tamper boundary 316.

Each communication adapter of the plurality of communication adapters 320 includes an outer I/O connector, such as the outer I/O connector 322a of the communication adapter 320a, the outer I/O connector 322b of the communication adapter 320b, the outer I/O connector 322c of the communication adapter 320c, and the outer I/O connector 322d of the communication adapter 320d. Each outer I/O connector 322a-322d is configured to connect to a ciphertext network or a plaintext network. In addition, each communication adapter of the plurality of communication adapters 320 includes an inner I/O connector, such as the inner I/O connector 323a of the communication adapter 320a, the inner I/O connector 323b of the communication adapter 320b, the inner I/O connector 323c of the communication adapter 320c, and the inner I/O connector 323d of the communication adapter 320d. Each inner I/O connector 323a-323d is configured to at least partially protrude from the housing 321 on a side opposite the outer I/O connector 322a-322d.

The cryptographic core device 311 includes an enclosure that forms a first adapter receptacle 360 and a second adapter receptacle 370 that are each configured to interface with a communication adapter of the plurality of communication adapters 320. The first adapter receptacle 360 and the second adapter receptacle 370 each include a respective physical opening 317a, 317b through which an inner I/O connector (e.g., the inner I/O connectors 323a-323d) of a communication adapter of the plurality of communication adapters 320 passes. Each of the first adapter receptacle 360 and the second adapter receptacle 370 includes a respective attachment/alignment mechanism 318a, 318b to mate with the corresponding attachment/alignment mechanism 324 of a communication adapter of the plurality of communication adapters 320. In some implementations, the first adapter receptacle 360 is equivalent to the second adapter receptacle 370. As used herein, the term attachment/alignment mechanism refers to a mechanism that provides alignment functionality, attachment functionality, or a combination of alignment and attachment functionality. Such functionality can be provided by posts and holes, screws and threaded holes, magnets, snaps, tabs and slots, or other such physical structures.

In some implementations, all of the communication adapters of the plurality of communication adapters 320 have equivalent physical structures but different inner I/O connector configurations and/or different outer I/O connector configurations. That is, individual communication adapters of the plurality of communication adapters 320 can have physically equivalent structures or a common physical design meaning that the housing 321 and the attachment/alignment mechanism 324 are structurally equivalent so that each communication adapter 320a-320d is capable of being interchangeably coupled to the first adapter receptacle 360 and/or to the second adapter receptacle 370.

The cryptographic core device 311 also includes within the enclosure and within the tamper boundary 316 a plurality of first signal converters 312, a plurality of second signal converters 313, and one or more cryptographic modules 315. Also within the tamper boundary 316 and the enclosure, the cryptographic core device 311 includes a first common communication interface 319a between the plurality of first signal converters 312 and the one or more cryptographic modules 315 such that data exchanged across the first common communication interface 319a between each of the plurality of first signal converters 312 and the one or more cryptographic modules 315 is in a first common format. Similarly, within the tamper boundary 316 and the enclosure, the cryptographic core device 311 also includes a second common communication interface 319b between the plurality of second signal converters 313 and the one or more cryptographic modules 315 such that data exchanged across the second common communication interface 319b between each of the plurality of second signal converters 313 and the one or more cryptographic modules 315 is in a second common format. The one or more cryptographic modules 315 is configured to provide cryptographic functionality to the cryptographic core device 311 by encrypting and decrypting data signals between the plurality of first signal converters 312 and the plurality of second signal converters 313. The plurality of first signal converters 312 is configured to connect to an inner I/O connector 323a-323d of a communication adapter of the plurality of communication adapters 320 when the communication adapter is mated with the first adapter receptacle 360. Similarly, the plurality of second signal converters 313 is configured to connect to an inner I/O connector 323a-323d of a communication adapter of the plurality of communication adapters 320 when the communication adapter is mated with the second adapter receptacle 370.

Individual outer I/O connectors 322a-322d can be configured for a particular connector. For example, the outer I/O connectors 322a-322d can be configured as RJ45, MIL, LR FIBER, and/or SR FIBER connectors. This advantageously allows for the cryptographic core device 311 to be adapted for use with different connection types and/or different signal types.

Individual inner I/O connectors 323a-323d of the plurality of communication adapters 320 can be configured to interface with a particular signal converter of the plurality of first signal converters 312 and/or a particular signal converter of the plurality of second signal converters 313. Each communication adapter 320a-320d is configured such that physically coupling a communication adapter to the cryptographic core device 311 at the first adapter receptacle 360 causes the respective inner I/O connector 323a-323d to connect to a particular signal converter of the plurality of first signal converters 312. Similarly, each communication adapter 320a-320d is configured such that physically coupling a communication adapter to the cryptographic core device 311 at the second adapter receptacle 370 causes the respective inner I/O connector 323a-323d to connect to a particular signal converter of the plurality of second signal converters 313. In addition, the plurality of communication adapters 320 is configured so that coupling or decoupling a communication adapter from the cryptographic core device 311 does not trigger the breach condition of the tamper boundary 316. In some implementations, decoupling a communication adapter from the cryptographic core device 311 triggers a maintenance notification. In some implementations, changing a communication adapter (e.g., the communication adapter 320a-320d) that is coupled to the cryptographic core device 311 changes the communication protocol of the cryptographic core device 311.

The cryptographic core device 311 also includes a power adapter 314 formed by the enclosure that physically separates the first adapter receptacle 360 and the second adapter receptacle 370. In some implementations, the power adapter 314 forms a protrusion between the first adapter receptacle 360 and the second adapter receptacle 370 to physically separate a communication adapter connected to the first adapter receptacle 360 (e.g., the first communication adapter 320a) from a communication adapter connected to the second adapter receptacle 370 (e.g., the second communication adapter 320c).

### Example Modular Communication Adapters

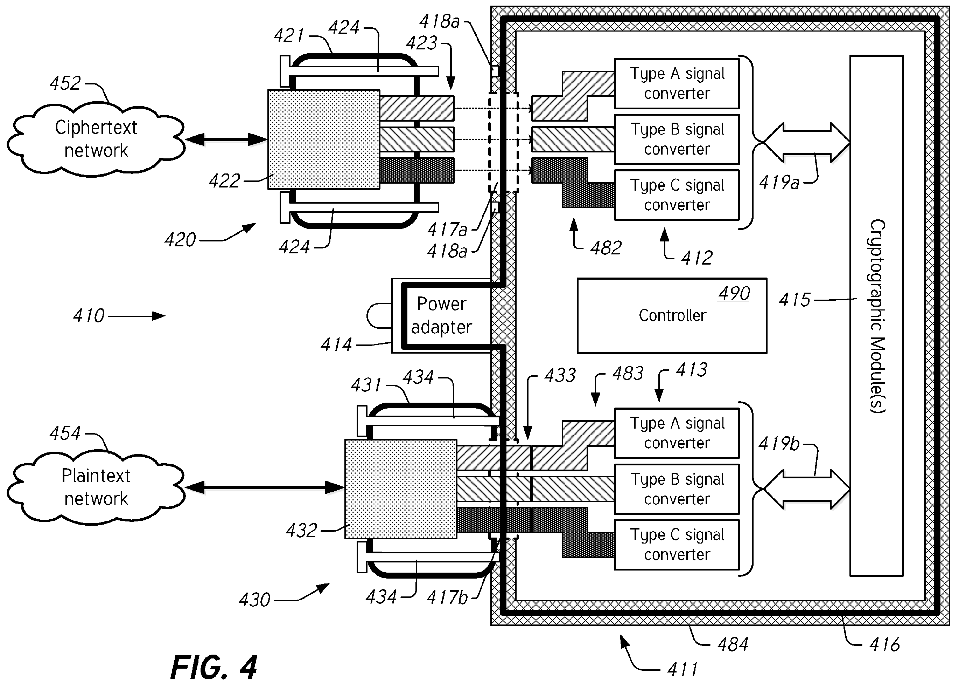

FIG. 4 illustrates an example of a first modular communication adapter 420 and a second modular communication adapter 430 interfacing with a plurality of first signal converters 412 and a plurality of second signal converters 413, respectively, within a cryptographic core device 411 in such a way as to not trigger a breach condition of a tamper boundary 416 of the cryptographic core device 411. The combination of the cryptographic core device 411 with the first modular communication adapter 420 and the second modular communication adapter 430 form a cryptographic communication system 410. Each of the first and second modular communication adapters 420, 430 is configured so that a single one of the inner I/O connectors 423, 433 is active to match the signal type of the outer I/O connector 422, 432. The modular communication adapters 420, 430 are similar to the communication adapters described herein with reference to FIGS. 1-3 and 5-9. The cryptographic core device 411 is similar to the cryptographic core devices described herein with reference to FIGS. 2, 3, and 9. In some implementations, the first modular communication adapter 420 and/or the second modular communication adapter 430 carry fully processed data and thus do not perform any cryptographic functions within the adapter, which may exempt such modular communication adapters from certain cryptographic security requirements.

The first modular communication adapter 420 includes a housing 421 and an attachment/alignment mechanism 424. The housing 421 supports an outer I/O connector 422 that receives a first signal type. The outer I/O connector 422 is configured to interface with a ciphertext network 452. The outer I/O connector 422 is electrically coupled to an inner I/O connector 423. The inner I/O connector 423 is configured to at least partially protrude from the housing 421 on a side of the housing 421 opposite to the outer I/O connector 422. The inner I/O connector 423 is configured to convey signals from the outer I/O connector 422 to a targeted signal converter of the plurality of first signal converters 412 within the cryptographic core device 411.

Similarly, the second modular communication adapter 430 includes a housing 431 and an attachment/alignment mechanism 434. The housing 431 supports an outer I/O connector 432 that receives a second signal type. The outer I/O connector 432 is configured to interface with a plaintext network 454. The outer I/O connector 432 is electrically coupled to an inner I/O connector 433. The inner I/O connector 433 is configured to at least partially protrude from the housing 431 on a side of the housing 431 opposite to the outer I/O connector 432. The inner I/O connector 433 is configured to convey signals from the outer I/O connector 432 to a targeted signal converter of the plurality of second signal converters 413 within the cryptographic core device 411.

The cryptographic core device 411 includes an enclosure 484 that houses the plurality of first signal converters 412, the plurality of second signal converters 413, and one or more cryptographic modules 415. The enclosure 484 can also form a power adapter 414 that is configured to provide power to the components of the cryptographic core device 411 and/or to the first and second modular communication adapters 420, 430. The power adapter 414 can be configured to physically separate the first modular communication adapter 420 and the second modular communication adapter 430 when mated with the cryptographic core device 411.

The cryptographic core device 411 also includes a first common I/O 419a configured to communicate signals from the first modular communication adapter 420 to the one or more cryptographic modules 415 via a targeted signal converter of the plurality of first signal converters 412. The first common I/O 419a is thus configured to convert between a signal format utilized by the one or more cryptographic modules 415 and a signal format utilized by the ciphertext network 452. Similarly, the cryptographic core device 411 includes a second common I/O 419b configured to communicate signals from the second modular communication adapter 430 to the one or more cryptographic modules 415 via a targeted signal converter of the plurality of second signal converters 413. The second common I/O 419b is thus configured to convert between a signal format utilized by the one or more cryptographic modules 415 and a signal format utilized by the plaintext network 454.

The cryptographic core device 411 includes the tamper boundary 416. In some implementations, the tamper boundary 416 is part of the enclosure 484. In some implementations, the tamper boundary 416 is a separate detectable boundary that may or may not be coincident with at least part of the enclosure 484. The tamper boundary 416 is configured to trigger a breach condition responsive to unauthorized penetration of the detectable boundary.

The enclosure 484 forms a first physical opening 417a configured to allow the inner I/O connector 423 of the first modular communication adapter 420 to extend within the enclosure 484 without triggering a breach condition of the tamper boundary 416. Similarly, the enclosure 484 forms a second physical opening 417b configured to allow the inner I/O connector 433 of the second modular communication adapter 430 to extend within the enclosure 484 without triggering a breach condition of the tamper boundary 416. The attachment/alignment mechanism 424 and the attachment/alignment mechanism 434 can be used to facilitate alignment and/or attachment of the inner I/O connectors 423, 433 with a targeted signal converter of the plurality of first signal converters 412 and the plurality of second signal converters 413, respectively. The attachment/alignment mechanism 424 is configured to interface with a corresponding attachment/alignment mechanism 418a of the cryptographic core device 411. The attachment/alignment mechanism 418a is configured so as to not penetrate, pierce, or extend through the tamper boundary 416, thereby maintaining the integrity of the tamper boundary 416. It should be noted that there can be a similar attachment/alignment mechanism formed by the enclosure 484 that is configured to interface with the corresponding attachment/alignment mechanism 434.

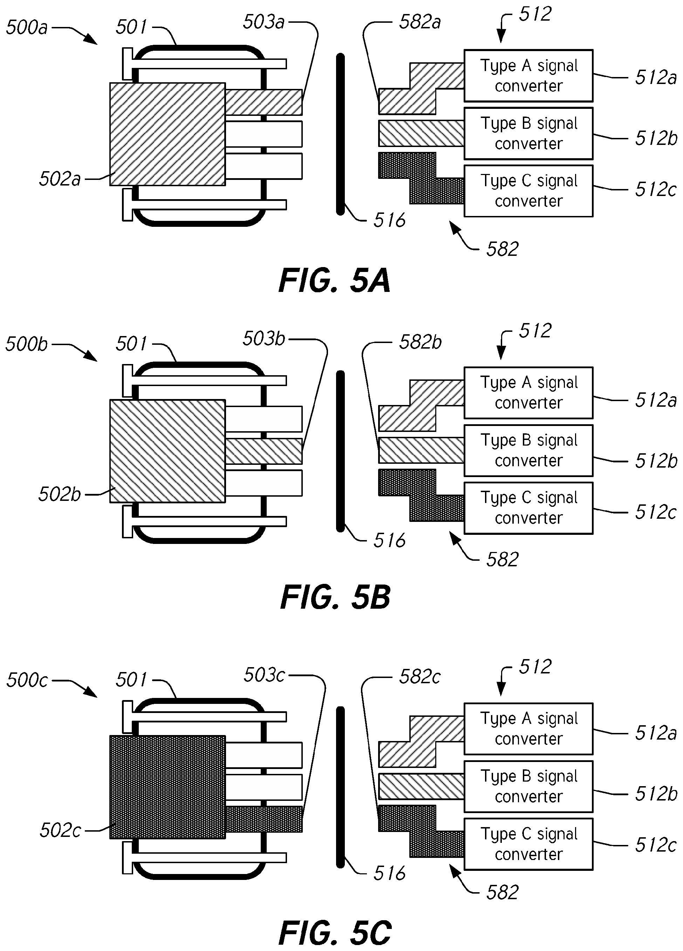

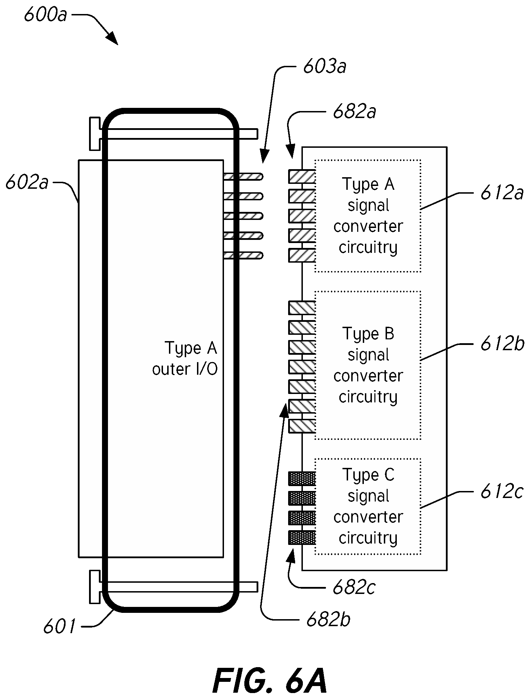

As illustrated, the inner I/O connector 423 includes a plurality of inner I/O connector types that are compatible with corresponding signal converters within the cryptographic core device 411. In some implementations, the inner I/O connector 423 includes a plurality of connectors. In various instances, a single one of the plurality of connectors may be active. For example, only the particular inner I/O connector compatible with a particular signal type is wired or even present. In some implementations, the inner I/O connector 423 includes a single connector for a single signal type. For example, the outer I/O connector 422 can be compatible with a type A signal so that the inner I/O connector 423 only includes a connector for type A signals. In such an example, the inner I/O connector 423 is physically configured to connect to the type A signal converter via a corresponding internal I/O connector 482 that is coupled to the type A signal converter of the plurality of first signal converters 412. The attachment/alignment mechanism 424 is configured to position the first modular communication adapter 420 so that the proper inner I/O connector 423 mates with the targeted internal I/O connector 482. Further examples of this functionality are described herein with reference to FIGS. 5A-5C and 6A-6C. In some implementations, the enclosure 484 forms an attachment/alignment mechanism corresponding to the attachment/alignment mechanism 424.

Similarly, the inner I/O connector 433 includes a plurality of inner I/O connector types that are compatible with corresponding signal converters within the cryptographic core device 411. In some implementations, the inner I/O connector 433 includes a plurality of connectors. In various instances, a single one of the plurality of connectors may be active. For example, only the particular inner I/O connector compatible with a particular signal type is wired or even present. In some implementations, the inner I/O connector 433 includes a single connector for a single signal type. For example, the outer I/O connector 432 can be compatible with a type C signal so that the inner I/O connector 433 only includes a connector for type C signals. In such an example, the inner I/O connector 433 is physically configured to connect to the type C signal converter via a corresponding internal I/O connector 483 that is coupled to the type C signal converter of the plurality of second signal converters 413. The attachment/alignment mechanism 434 is configured to position the second modular communication adapter 430 so that the proper inner I/O connector 433 mates with the targeted internal I/O connector 483. Further examples of this functionality are described herein with reference to FIGS. 5A-5C and 6A-6C. In some implementations, the enclosure 484 forms an attachment/alignment mechanism corresponding to the attachment/alignment mechanism 434.

The first modular communication adapter 420 is interchangeable with other modular communication adapters. Swapping the first modular communication adapter 420 with a compatible communication adapter can change the signal type to be compatible with the ciphertext network 452. Similarly, the second modular communication adapter 430 is interchangeable with other modular communication adapters. Swapping the second modular communication adapter 430 with a compatible communication adapter can change the signal type to be compatible with the plaintext network 454. This can be done when switching networks that the cryptographic core device 411 is configured to communicate with. In some implementations, the signal types of the first modular communication adapter 420 and the second modular communication adapter 430 need not be the same.

Thus, the first modular communication adapter 420 is configured to mate with the cryptographic core device 411 in such a way that the inner I/O connector 423 connects with a targeted internal I/O connector 482 so that signals received at the outer I/O connector 422 are transmitted to the one or more cryptographic modules 415 through the targeted signal converter of the plurality of first signal converters 412 that matches the signal type received at the outer I/O connector 422, which is compatible with the ciphertext network 452. That is, the first modular communication adapter 420 is configured such that physically coupling the first modular communication adapter 420 to the cryptographic core device 411 causes the inner I/O connector 423 of the first modular communication adapter 420 to connect to a particular first signal converter of the plurality of first signal converters 412, the particular first signal converter compatible with a communication protocol of the first modular communication adapter 420. Coupling or decoupling the first modular communication adapter 420 to the cryptographic core device 411 does not trigger the breach condition of the tamper boundary 416. In some implementations, decoupling the first modular communication adapter 420 from the cryptographic core device 411 triggers a maintenance notification.

Similarly, the second modular communication adapter 430 is configured to mate with the cryptographic core device 411 in such a way that the inner I/O connector 433 connects with a targeted internal I/O connector 483 so that signals received at the outer I/O connector 432 are transmitted to the one or more cryptographic modules 415 through the targeted signal converter of the plurality of second signal converters 413 that matches the signal type received at the outer I/O connector 432, which is compatible with the plaintext network 454. That is, the second modular communication adapter 430 is configured such that physically coupling the second modular communication adapter 430 to the cryptographic core device 411 causes the inner I/O connector 433 of the second modular communication adapter 430 to connect to a particular second signal converter of the plurality of second signal converters 413, the particular second signal converter compatible with a communication protocol of the second modular communication adapter 430. Coupling or decoupling the second modular communication adapter 430 to the cryptographic core device 411 does not trigger the breach condition of the tamper boundary 416. In some implementations, decoupling the second modular communication adapter 430 from the cryptographic core device 411 triggers a maintenance notification.

In some implementations, different communication adapters compatible with the cryptographic core device 411 have different physical configuration for the inner I/O connector to couple to a targeted signal converter of the plurality of first signal converters 412 or a targeted signal converter of the plurality of second signal converters 413. In some implementations, the attachment/alignment mechanism 424, 434 of each modular communication adapter 420, 430 is configured to ensure that the inner I/O connector 423, 433 is coupled to the targeted signal converter when the modular communication adapter 420, 430 is mated to the cryptographic core device 411.

In some implementations, the cryptographic core device 411 includes a controller 490 within the enclosure 484. The controller 490 can include one or more processors and a data store to execute programmed instructions within the cryptographic core device 411. For example, the controller 490 can be configured to detect the signal type of the first modular communication adapter 420 and/or the second modular communication adapter 430 responsive to the communication adapter being mated with the cryptographic core device 411. As another example, the controller 490 can be configured to log changes to the cryptographic core device 411, such as when modular communication adapters are connected or disconnected.

FIGS. 5A, 5B, and 5C illustrate examples of modular communication adapters connecting to targeted signal converters within cryptographic core devices described herein. FIG. 5A illustrates a type A modular communication adapter 500a compatible with type A signals and configured to interface with a type A internal I/O connector 582a of a plurality of internal I/O connectors 582 coupled to a type A signal converter 512a of a plurality of signal converters 512. FIG. 5B illustrates a type B modular communication adapter 500b compatible with type B signals and configured to interface with a type B internal I/O connector 582b coupled to a type B signal converter 512b. FIG. 5C illustrates a type C modular communication adapter 500c compatible with type C signals and configured to interface with a type C internal I/O connector 582c coupled to a type C signal converter 512c. Here, type A, B, and C signals do not refer to any specific types of signals but are stand ins for any of a variety of signal types that can be processed by the cryptographic communication systems described herein. Furthermore, it should be noted that the number of signal types with corresponding internal I/O connectors and signal converters need not be limited to exactly three as illustrated, there may be two signal types present with corresponding internal I/O connectors and signal converters, four signal types present with corresponding internal I/O connectors and signal converters, or five or more signal types present with corresponding internal I/O connectors and signal converters.

Each of the modular communication adapters 500a-500c are similar to the first modular communication adapter 420 and/or the second modular communication adapter 430 such that each includes a housing 501 and an outer I/O connector 502a-502c and an inner I/O connector 503a-503c. Although not illustrated, the plurality of signal converters 512 and the corresponding internal I/O connectors 582 are housed within a cryptographic core device, similar to the cryptographic core devices described herein with reference to FIGS. 2-4. Thus, a tamper boundary 516 is illustrated that is similar to the tamper boundaries described herein with reference to FIGS. 2-4. The tamper boundary 516 is shown to demonstrate that the inner I/O connector 503a-503c is configured to mate with a compatible internal I/O connector 582 without disrupting the tamper boundary 516 or without triggering a breach condition of the tamper boundary 516. Advantageously, the disclosed modular communication adapters 500a-500c are configured to connect to the correct internal I/O connector inside of the tamper boundary 516 of a cryptographic core device.

FIG. 5A illustrates the modular communication adapter 500a that includes a type A outer I/O connector 502a. The type A outer I/O connector 502a sends and receives type A signals to a network, such as a ciphertext network or a plaintext network. The type A outer I/O connector 502a can have a physical interface that is compatible with certain connector types, examples of which are provided herein. The type A outer I/O connector 502a interfaces with the type A inner I/O connector 503a. Here, the type B and type C inner I/O connectors are inactive and only the type A inner I/O connector 503a is active. In some implementations, this may mean that the type B and type C inner I/O connectors are absent or unwired.

Mating the modular communication adapter 500a with a cryptographic core device causes the type A inner I/O connector 503a to connect to a corresponding type A internal I/O connector 582a within an enclosure of the cryptographic core device. Mating the modular communication adapter 500a in this way does not trigger the breach condition of the tamper boundary 516. Once mated, signals flow between the modular communication adapter 500a and the type A signal converter 512a via the type A internal I/O connector 582a and the type A inner I/O connector 503a.

FIG. 5B illustrates the modular communication adapter 500b that includes a type B outer I/O connector 502b. The type B outer I/O connector 502b sends and receives type B signals to a network, such as a ciphertext network or a plaintext network. The type B outer I/O connector 502b can have a physical interface that is compatible with certain connector types, examples of which are provided herein. The type B outer I/O connector 502b interfaces with the type B inner I/O connector 503b. Here, the type A and type C inner I/O connectors are inactive and only the type B inner I/O connector 503b is active. In some implementations, this may mean that the type A and type C inner I/O connectors are absent or unwired.

Mating the modular communication adapter 500b with a cryptographic core device causes the type B inner I/O connector 503b to connect to a corresponding type B internal I/O connector 582b within an enclosure of the cryptographic core device. Mating the modular communication adapter 500b in this way does not trigger the breach condition of the tamper boundary 516. Once mated, signals flow between the modular communication adapter 500b and the type B signal converter 512b via the type B internal I/O connector 582b and the type B inner I/O connector 503b.

FIG. 5C illustrates the modular communication adapter 500c that includes a type C outer I/O connector 502c. The type C outer I/O connector 502c sends and receives type C signals to a network, such as a ciphertext network or a plaintext network. The type C outer I/O connector 502c can have a physical interface that is compatible with certain connector types, examples of which are provided herein. The type C outer I/O connector 502c interfaces with the type C inner I/O connector 503c. Here, the type A and type B inner I/O connectors are inactive and only the type C inner I/O connector 503c is active. In some implementations, this may mean that the type A and type B inner I/O connectors are absent or unwired.

Mating the modular communication adapter 500c with a cryptographic core device causes the type C inner I/O connector 503c to connect to a corresponding type C internal I/O connector 582c within an enclosure of the cryptographic core device. Mating the modular communication adapter 500c in this way does not trigger the breach condition of the tamper boundary 516. Once mated, signals flow between the modular communication adapter 500c and the type C signal converter 512c via the type C internal I/O connector 582c and the type C inner I/O connector 503c.

In some implementations, the same physical connector (e.g., the outer I/O connector 502a-502c) can be used with different signal types. In such implementations, different outer I/O connectors can have the same inner I/O connector configuration. Similarly, the same outer I/O connectors can have different inner I/O connector configurations. This enables a single physical connector design to handle multiple signal types.

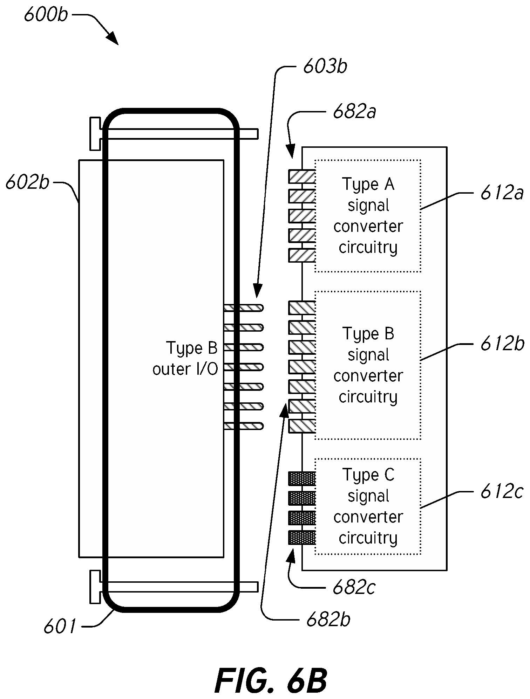

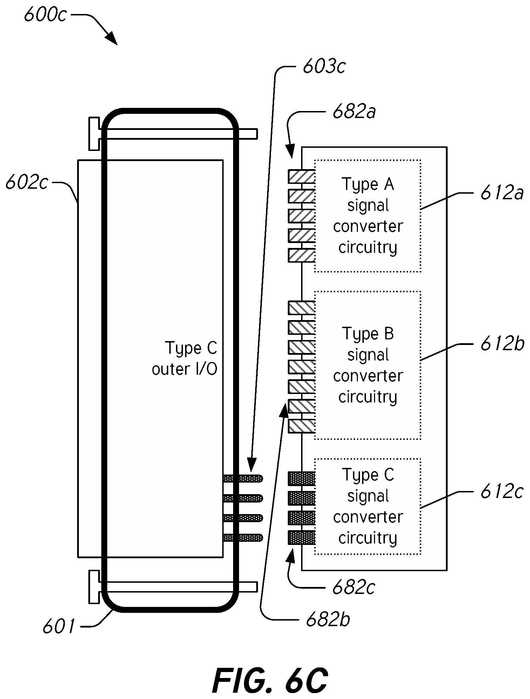

FIGS. 6A, 6B, and 6C illustrate additional examples of modular communication adapters connecting to targeted signal converters within cryptographic core devices described herein. FIG. 6A illustrates a type A modular communication adapter 600a compatible with type A signals and configured to interface with a type A internal I/O connector 682a coupled to type A signal converter circuitry 612a. FIG. 6B illustrates a type B modular communication adapter 600b compatible with type B signals and configured to interface with a type B internal I/O connector 682b coupled to type B signal converter circuitry 612b. FIG. 6C illustrates a type C modular communication adapter 600c compatible with type C signals and configured to interface with a type C internal I/O connector 682c coupled to type C signal converter circuitry 612c. Each of the modular communication adapters 600a-600c can be a ciphertext communication adapter configured to connect to a ciphertext network and/or a plaintext communication adapter configured to connect to a plaintext network.

Each of the modular communication adapters 600a-600c represents an example implementation of a corresponding modular communication adapter 500a-500c described herein with reference to FIGS. 5A-5C. Accordingly, each of the modular communication adapters 600a-600c includes a housing 601 similar to the housing 501 and an outer I/O connector 602a, 602b, or 602c similar to the outer I/O connectors 502a-502c. Each of the modular communication adapters 600a-600c includes a plurality of pins forming an inner I/O connector 603a, 603b, 603c. Each of the internal I/O connectors 682a-682c includes a plurality of pins, the number of pins being the same as the number of pins of the corresponding inner I/O connector 603a-603c. In some implementations, each of the modular communication adapters 600a-600c can include all of the pins of the internal I/O connectors for the various signal types but only the subset of pins corresponding to the signal type of the modular communication adapter can be wired. The type A outer I/O connector 602a is configured to communicate type A signals, the type B outer I/O connector 602b is configured to communicate type B signals, and the type C outer I/O connector 602c is configured to communicate type C signals.

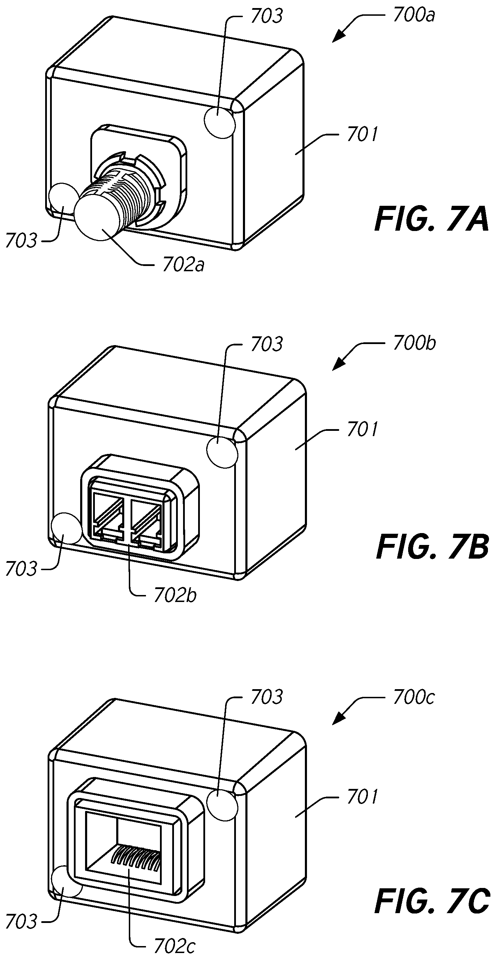

FIGS. 7A, 7B, and 7C illustrate examples of modular communication adapters for use with the cryptographic communication systems described herein. FIG. 7A illustrates a first modular communication adapter 700a that has a first outer I/O connector 702a configured to interface with a first connector type. FIG. 7B illustrates a second modular communication adapter 700b that has a second outer I/O connector 702b configured to interface with a second connector type. FIG. 7C illustrates a third modular communication adapter 700c that has a third outer I/O connector 702c configured to interface with a third connector type. Each modular communication adapter includes a housing 701 and attachment/alignment mechanisms 703. The housing 701 supports the outer I/O connectors 702a-702c. Examples of outer I/O connectors 702a-702c include, for example and without limitation, connectors such as RJ45, MIL, LR FIBER, and SR FIBER connectors.

Each housing 701 for the modular communication adapters 700a-700c can have physically equivalent structures or a common physical design meaning that the housing 701 and the attachment/alignment mechanisms 703 are structurally equivalent so that each modular communication adapter 700a-700c is capable of being interchangeably coupled to an adapter receptacle of a cryptographic core device. This ensures alignment of the inner I/O connectors of the modular communication adapters 700a-700c with targeted internal I/O connectors of the cryptographic core device, as described herein. That is, the housing 701 of each modular communication adapter 700a-700c includes the attachment/alignment mechanisms 703 that interface with a corresponding adapter receptacle of the cryptographic core device to ensure that the inner I/O connector of the respective modular communication adapter 700a-700c connects to a particular signal converter and without triggering the breach condition of the tamper boundary.

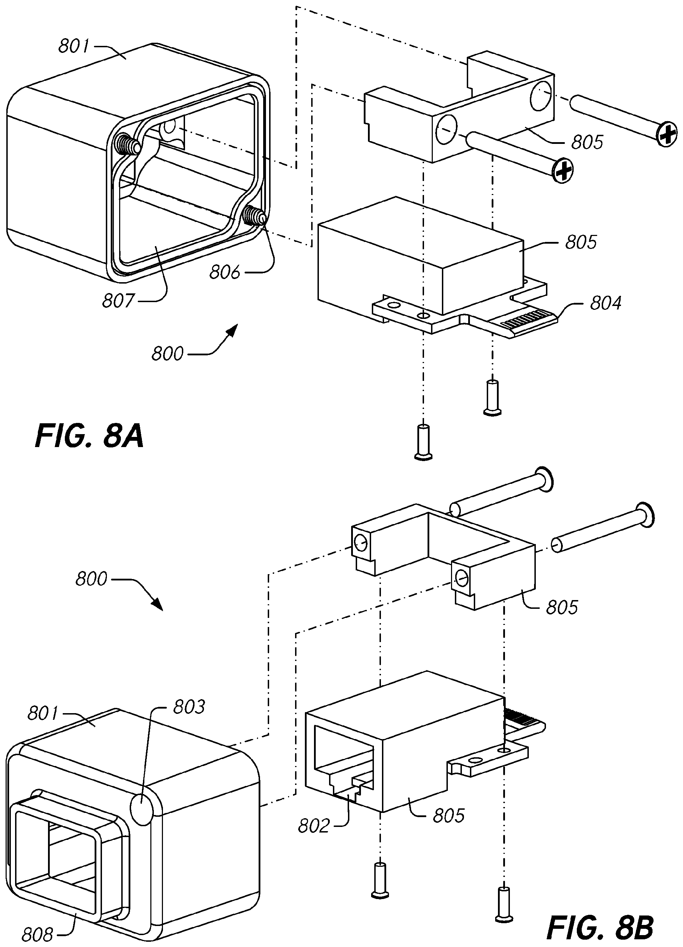

FIGS. 8A and 8B illustrate an exploded view of an example modular communication adapter 800. The modular communication adapter 800 can be any of the communication adapters described herein with reference to FIGS. 1-7. The modular communication adapter 800 includes a housing 801 that forms an external opening 808 to enable an outer I/O connector 802 to be exposed. The housing forms an internal opening 807 to support positioning means 805 that supports and/or forms the outer I/O connector 802 and that supports an inner I/O connector 804. The positioning means 805 supports the inner I/O connector 804 such that a portion of the inner I/O connector at least partially protrudes from the housing 801 out of the internal opening 807 on a side opposite the outer I/O connector 802.

The positioning means 805 includes brackets, screws, and other such components to secure the connectors within the internal opening 807 formed by the housing 801. The housing 801 also forms attachment/alignment mechanisms 803 configured to facilitate attachment and alignment with an adapter receptacle of a cryptographic core device, as described herein. Through the attachment/alignment mechanisms 803, attachment/alignment mechanisms 806 can be inserted to couple the modular communication adapter 800 to an adapter receptacle of a cryptographic core device.

### Cryptographic Communication System with Modular Communication Adapters

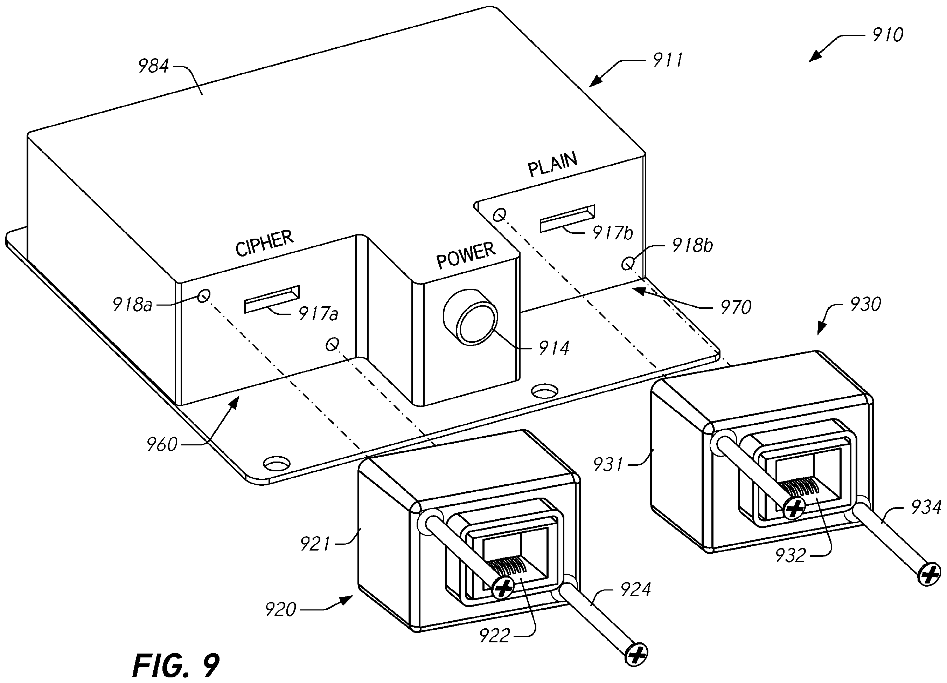

FIG. 9 illustrates an example cryptographic communication system 910 that includes a cryptographic core device 911 interfacing with a first communication adapter 920 and a second communication adapter 930. The cryptographic core device 911 includes an enclosure 984 forming a first adapter receptacle 960 to interface with the first communication adapter 920 and a second adapter receptacle 970 to interface with the second communication adapter 930.

The first adapter receptacle 960 and the second adapter receptacle 970 each include a physical opening 917a, 917b through which inner I/O connectors of the communication adapters pass. The first adapter receptacle 960 and the second adapter receptacle 970 each include attachment/alignment mechanisms 918a, 918b to facilitate attachment and/or alignment of the first communication adapter 920 and the second communication adapter 930 with the cryptographic core device 911 so that the inner I/O connectors connect to targeted internal I/O connectors corresponding to the signal types of the communication adapters 920, 930. Each communication adapter 920, 930 is physically configured to connect its inner I/O connector to a targeted signal converter of the plurality of signal converters housed within the cryptographic core device 911. In some implementations, each communication adapter 920, 930 is physically configured to mate with the first adapter receptacle 960 or the second adapter receptacle 970 in identical fashions.

The cryptographic core device 911 includes a power adapter 914 formed by the enclosure 984. The power adapter 914 provides power to the cryptographic core device 911 and components within the cryptographic core device 911, examples of which are described herein. The power adapter 914 physically separates the first adapter receptacle 960 and the second adapter receptacle 970. In some implementations, the power adapter 914 forms a protrusion between the first adapter receptacle 960 and the second adapter receptacle 970 to physically separate the first communication adapter 920 from the second communication adapter 930 when connected to the cryptographic core device 911.

The first communication adapter 920 includes a housing 921 and an outer I/O connector 922 with attachment/alignment mechanisms 924, similar to the communication adapters described herein with reference to FIGS. 4-6. Similarly, the second communication adapter 930 includes a housing 931 and an outer I/O connector 932 with attachment/alignment mechanisms 934, similar to the communication adapters described herein with reference to FIGS. 4-6. The outer I/O connector 922 can be the same or different from the outer I/O connector 932. The signal types for the first communication adapter 920 and the second communication adapter 930 can be the same or different. Moreover, the outer I/O connector 922 or the outer I/O connector 932 can be changed by changing the respective communication adapter to a communication adapter with a different outer I/O connector, as described herein. This capability facilitates the configuration of a new cryptographic system by merely selecting the communication adapters that correspond to the desired signal type(s). This capability also facilitates reconfiguring an existing cryptographic system for different signal type(s).

Although not shown, the first communication adapter 920 and the second communication adapter 930 each include inner I/O connectors that are configured to extend into the enclosure 984 through the physical opening 917a or the physical opening 917b when the adapter is connected to the cryptographic core device 911 at the first adapter receptacle 960 or the second adapter receptacle 970. Thus, attaching the first communication adapter 920 and/or the second communication adapter 930 to the cryptographic core device 911 causes the inner I/O connector of the respective communication adapter to pass through the physical opening 917a and/or the physical opening 917b to cause the inner I/O connector to connect to a corresponding internal I/O connector within the enclosure 984 of the cryptographic core device 911, as described herein. The corresponding internal I/O connector communicates with a targeted signal converter compatible with the signal type or communication protocol of the corresponding outer I/O connector. The attachment/alignment mechanisms 924 and attachment/alignment mechanisms 934 along with the corresponding attachment/alignment mechanisms 918a and the attachment/alignment mechanisms 918b of the first adapter receptacle 960 and the second adapter receptacle 970, respectively, facilitate attachment and/or alignment of the inner I/O connector with the targeted internal I/O connector.

The cryptographic core device 911 includes a tamper boundary (not shown). In some implementations, the tamper boundary is part of, incorporated into, or otherwise related to the enclosure 984. In some implementations, the tamper boundary is separate from the enclosure 984. The cryptographic communication system 910 is configured so that attaching or detaching the first communication adapter 920 and/or the second communication adapter 930 to the first adapter receptacle 960 and/or the second adapter receptacle 970 does not trigger a breach condition of the tamper boundary, as described herein. Thus, connecting communication adapters or swapping communication adapters to change a configuration of the cryptographic communication system 910 can be accomplished without disturbing the tamper boundary, thereby obviating any need to recertify any cryptographic modules inside the tamper boundary.

It should be noted that although two attachment/alignment mechanism combinations are illustrated in FIGS. 7A-9 for communication adapters 700a-c, 800, 920, 930 and cryptographic core device 911, there can be more or fewer attachment/alignment mechanisms. For example, the communication adapters and cryptographic core devices can have one, three, four, or more than four attachment/alignment mechanisms.

### Methods for Configuring a Cryptographic Communication System

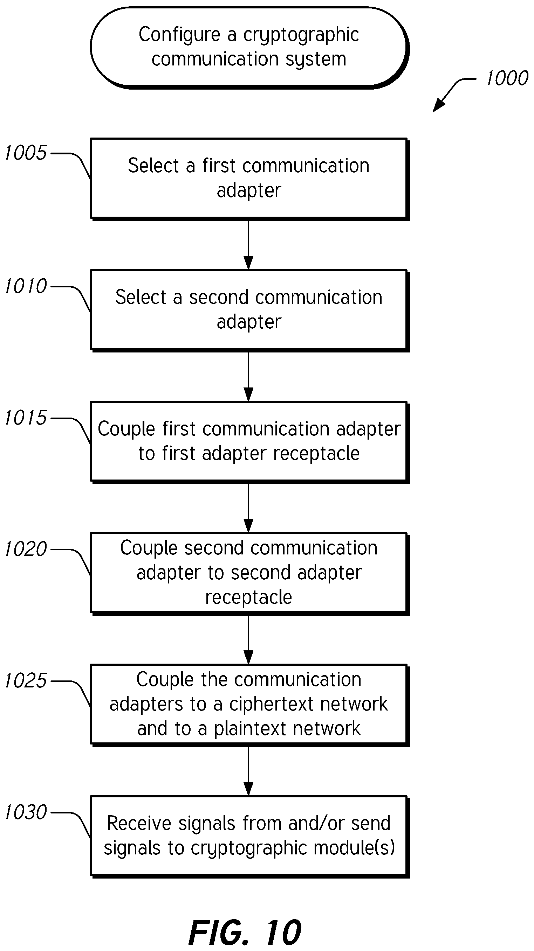

FIG. 10 illustrates an example method 1000 for configuring a cryptographic communication system. The cryptographic communication system can be any of the cryptographic communication systems described herein with reference to FIGS. 1-4 and 9. The method 1000 can be performed to customize a cryptographic communication system for a specific signal type by selecting and attaching corresponding communication adapters.

In block 1005, a first communication adapter is selected. The first communication adapter includes a housing, an outer I/O connector configured to connect to a ciphertext network, and an inner I/O connector. The first communication adapter can be any of the communication adapters described herein with reference to FIGS. 1-9.

In block 1010, a second communication adapter is selected. The second communication adapter includes a housing, an outer I/O connector configured to connect to a plaintext network, and an inner I/O connector. The second communication adapter can be any of the communication adapters described herein with reference to FIGS. 1-9.

In block 1015, the first communication adapter is coupled to a first adapter receptacle of a cryptographic core device. Coupling the first communication adapter to the first adapter receptacle couples the inner I/O connector of the first communication adapter to a particular first signal converter of a plurality of first signal converters of the cryptographic core device. The cryptographic core device can be any of the cryptographic core devices described herein with reference to FIGS. 2-4 and 9.

In block 1020, the second communication adapter is coupled to a second adapter receptacle of the cryptographic core device. Coupling the second communication adapter to the second adapter receptacle couples the inner I/O connector of the second communication adapter to a particular second signal converter of a plurality of second signal converters of the cryptographic core device.

The first communication adapter is configured such that physically coupling the first communication adapter to the cryptographic core device causes the respective inner I/O connector to connect to the particular first signal converter of the plurality of first signal converters. Similarly, the second communication adapter is configured such that physically coupling the second communication adapter to the cryptographic core device causes the respective inner I/O connector to connect to the particular second signal converter of the plurality of second signal converters. Coupling or decoupling the first communication adapter and the second communication adapter to the cryptographic core device does not trigger a breach condition of a tamper boundary of the cryptographic core device.

In block 1025, the first communication adapter is coupled to the ciphertext network and/or the second communication adapter is coupled to the plaintext network. In some implementations, prior to communication with the ciphertext network and/or the plaintext network, a maintenance action by an administrator is performed. In block 1030, signals are received from and/or sent to a cryptographic module by the respective communication adapters. The signals are then encrypted and/or decrypted by the cryptographic module of the cryptographic core device through connection with the particular signal converters of the plurality of first signal converters and/or the plurality of second signal converters. In some implementations, the signals processed by the cryptographic module can then be transmitted to the other network by the corresponding communication adapter. That is, signals received at the first communication adapter from the ciphertext network and processed by the particular signal converter of the plurality of first signal converters and then processed by the cryptographic module can then be transmitted to the plaintext network through the second communication adapter. Similarly, signals received at the second communication adapter from the plaintext network and processed by the particular signal converter of the plurality of second signal converters and then processed by the cryptographic module can then be transmitted to the ciphertext network through the first communication adapter.

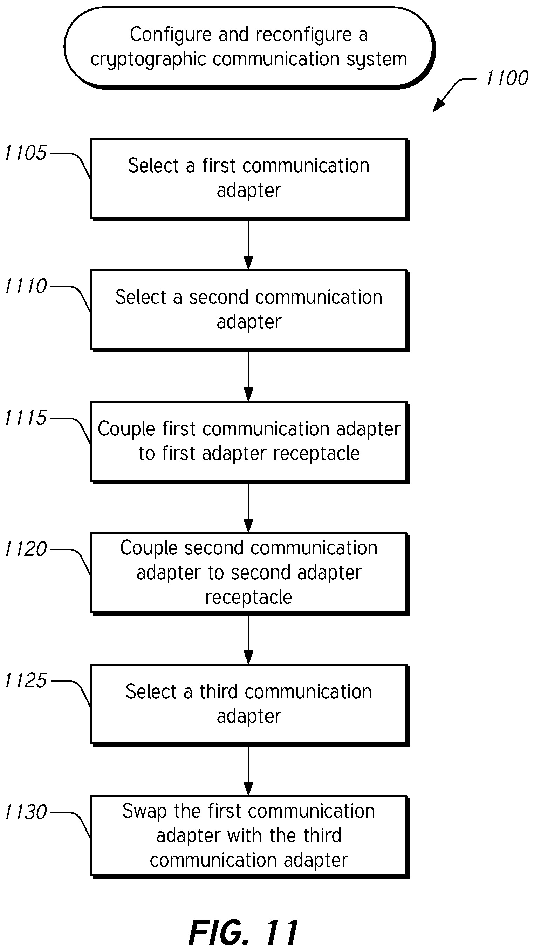

FIG. 11 illustrates an example method 1100 for configuring and reconfiguring a cryptographic communication system. The cryptographic communication system can be any of the cryptographic communication systems described herein with reference to FIGS. 1-4 and 9. The method 1100 can be performed to reconfigure a cryptographic communication system by swapping an existing communication adapter with a different communication adapter. This reconfiguration can reconfigure the cryptographic communication system from an initial signal type to a new signal type.

In block 1105, a first communication adapter is selected. The first communication adapter includes a housing, an outer I/O connector configured to connect to a ciphertext network, and an inner I/O connector. The first communication adapter can be any of the communication adapters described herein with reference to FIGS. 1-9.

In block 1110, a second communication adapter is selected. The second communication adapter includes a housing, an outer I/O connector configured to connect to a plaintext network, and an inner I/O connector. The first communication adapter can be any of the communication adapters described herein with reference to FIGS. 1-9.

In block 1115, the first communication adapter is coupled to a first adapter receptacle of a cryptographic core device. Coupling the first communication adapter to the first adapter receptacle couples the inner I/O connector of the first communication adapter to a particular first signal converter of a plurality of first signal converters of the cryptographic core device. The cryptographic core device can be any of the cryptographic core devices described herein with reference to FIGS. 2-4 and 9.

In block 1120, the second communication adapter is coupled to a second adapter receptacle of the cryptographic core device. Coupling the second communication adapter to the second adapter receptacle couples the inner I/O connector of the second communication adapter to a particular second signal converter of a plurality of second signal converters of the cryptographic core device.

In block 1125, a third communication adapter is selected. The third communication adapter can include a housing, an outer I/O connector configured to connect to the ciphertext network, and an inner I/O connector.

In block 1130, the first communication adapter is swapped with the third communication adapter. After removing the first communication adapter from the first adapter receptacle, the third communication adapter is coupled to the first adapter receptacle of the cryptographic core device, thereby coupling the inner I/O connector of the third communication adapter to a particular signal converter of a plurality of first signal converters of the cryptographic core device.

Optionally, the second communication adapter can be exchanged with a fourth communication adapter. The fourth communication adapter can include a housing, an outer I/O connector configured to connect to the plaintext network, and an inner I/O connector. After removing the second communication adapter from the second adapter receptacle, the fourth communication adapter can then be coupled to the second adapter receptacle of the cryptographic core device, thereby coupling the inner I/O connector of the fourth communication adapter to a particular signal converter of a plurality of second signal converters of the cryptographic core device. Exchanging the communication adapter can be configured to change the communication protocol of the cryptographic core device.

### Additional Embodiments and Terminology

The present disclosure describes various features, no single one of which is solely responsible for the benefits described herein. It will be understood that various features described herein may be combined, modified, or omitted, as would be apparent to one of ordinary skill. Other combinations and sub-combinations than those specifically described herein will be apparent to one of ordinary skill, and are intended to form a part of this disclosure. Various methods are described herein in connection with various flowchart steps and/or phases. It will be understood that in many cases, certain steps and/or phases may be combined together such that multiple steps and/or phases shown in the flowcharts can be performed as a single step and/or phase. Also, certain steps and/or phases can be broken into additional sub-components to be performed separately. In some instances, the order of the steps and/or phases can be rearranged and certain steps and/or phases may be omitted entirely. Also, the methods described herein are to be understood to be open-ended, such that additional steps and/or phases to those shown and described herein can also be performed.

Some aspects of the systems and methods described herein can advantageously be implemented using, for example, computer software, hardware, firmware, or any combination of computer software, hardware, and firmware. Computer software can comprise computer executable code stored in a computer readable medium (e.g., non-transitory computer readable medium) that, when executed, performs the functions described herein. In some embodiments, computer-executable code is executed by one or more general purpose computer processors. A skilled artisan will appreciate, in light of this disclosure, that any feature or function that can be implemented using software to be executed on a general purpose computer can also be implemented using a different combination of hardware, software, or firmware. For example, such a module can be implemented completely in hardware using a combination of integrated circuits. Alternatively or additionally, such a feature or function can be implemented completely or partially using specialized computers designed to perform the particular functions described herein rather than by general purpose computers.

Multiple distributed computing devices can be substituted for any one computing device described herein. In such distributed embodiments, the functions of the one computing device are distributed (e.g., over a network) such that some functions are performed on each of the distributed computing devices.

Some embodiments may be described with reference to equations, algorithms, and/or flowchart illustrations. These methods may be implemented using computer program instructions executable on one or more computers. These methods may also be implemented as computer program products either separately, or as a component of an apparatus or system. In this regard, each equation, algorithm, block, or step of a flowchart, and combinations thereof, may be implemented by hardware, firmware, and/or software including one or more computer program instructions embodied in computer-readable program code logic. As will be appreciated, any such computer program instructions may be loaded onto one or more computers, including without limitation a general purpose computer or special purpose computer, or other programmable processing apparatus to produce a machine, such that the computer program instructions which execute on the computer(s) or other programmable processing device(s) implement the functions specified in the equations, algorithms, and/or flowcharts. It will also be understood that each equation, algorithm, and/or block in flowchart illustrations, and combinations thereof, may be implemented by special purpose hardware-based computer systems which perform the specified functions or steps, or combinations of special purpose hardware and computer-readable program code logic means.

Furthermore, computer program instructions, such as embodied in computer-readable program code logic, may also be stored in a computer readable memory (e.g., a non-transitory computer readable medium) that can direct one or more computers or other programmable processing devices to function in a particular manner, such that the instructions stored in the computer-readable memory implement the function(s) specified in the block(s) of the flowchart(s). The computer program instructions may also be loaded onto one or more computers or other programmable computing devices to cause a series of operational steps to be performed on the one or more computers or other programmable computing devices to produce a computer-implemented process such that the instructions which execute on the computer or other programmable processing apparatus provide steps for implementing the functions specified in the equation(s), algorithm(s), and/or block(s) of the flowchart(s).

Some or all of the methods and tasks described herein may be performed and fully automated by a computer system. The computer system may, in some cases, include multiple distinct computers or computing devices (e.g., physical servers, workstations, storage arrays, etc.) that communicate and interoperate over a network to perform the described functions. Each such computing device typically includes a processor (or multiple processors) that executes program instructions or modules stored in a memory or other non-transitory computer-readable storage medium or device. The various functions disclosed herein may be embodied in such program instructions, although some or all of the disclosed functions may alternatively be implemented in application-specific circuitry (e.g., ASICs or FPGAs) of the computer system. Where the computer system includes multiple computing devices, these devices may, but need not, be co-located. The results of the disclosed methods and tasks may be persistently stored by transforming physical storage devices, such as solid state memory chips and/or magnetic disks, into a different state.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." The word "coupled", as generally used herein, refers to two or more elements that may be either directly connected, or connected by way of one or more intermediate elements. Additionally, the words "herein," "above," "below," and words of similar import, when used in this application, shall refer to this application as a whole and not to any particular portions of this application. Where the context permits, words in the above Detailed Description using the singular or plural number may also include the plural or singular number respectively. The word "or" in reference to a list of two or more items, that word covers all of the following interpretations of the word: any of the items in the list, all of the items in the list, and any combination of the items in the list. The word "exemplary" is used exclusively herein to mean "serving as an example, instance, or illustration." Any implementation described herein as "exemplary" is not necessarily to be construed as preferred or advantageous over other implementations.

The disclosure is not intended to be limited to the implementations shown herein. Various modifications to the implementations described in this disclosure may be readily apparent to those skilled in the art, and the generic principles defined herein may be applied to other implementations without departing from the spirit or scope of this disclosure. The teachings of the invention provided herein can be applied to other methods and systems, and are not limited to the methods and systems described above, and elements and acts of the various embodiments described above can be combined to provide further embodiments. Accordingly, the novel methods and systems described herein may be embodied in a variety of other forms; furthermore, various omissions, substitutions and changes in the form of the methods and systems described herein may be made without departing from the spirit of the disclosure. The accompanying claims and their equivalents are intended to cover such forms or modifications as would fall within the scope and spirit of the disclosure.

## Claims

1. A cryptographic communication system comprising:
a first communication adapter for connecting to a ciphertext network, the first communication adapter having a housing, an outer I/O connector configured to connect to the ciphertext network, and an inner I/O connector that partially protrudes from the housing on a side opposite the outer I/O connector;
a second communication adapter for connecting to a plaintext network, the second communication adapter having a housing, an outer I/O connector configured to connect to the plaintext network, and an inner I/O connector that partially protrudes from the housing on a side opposite the outer I/O connector; and
a cryptographic core device comprising:
an enclosure forming a first adapter receptacle to interface with the first communication adapter and a second adapter receptacle to interface with the second communication adapter, each of the first adapter receptacle and the second adapter receptacle including a physical opening through which respective inner I/O connectors pass;
a plurality of first signal converters housed within the enclosure and configured to connect to the inner I/O connector of the first communication adapter when the first communication adapter is mated with the first adapter receptacle;
a plurality of second signal converters housed within the enclosure and configured to connect to the inner I/O connector of the second communication adapter when the second communication adapter is mated with the second adapter receptacle;
a cryptographic module housed within the enclosure, the cryptographic module configured to provide cryptographic functionality to the cryptographic core device by encrypting and decrypting data signals between the plurality of first signal converters and the plurality of second signal converters; and
a tamper boundary comprising a detectable boundary that triggers a breach condition responsive to unauthorized penetration of the detectable boundary,
wherein the first communication adapter is configured such that physically coupling the first communication adapter to the cryptographic core device causes the inner I/O connector of the first communication adapter to connect to a particular first signal converter of the plurality of first signal converters, the particular first signal converter compatible with a communication protocol of the first communication adapter,
wherein the second communication adapter is configured such that physically coupling the second communication adapter to the cryptographic core device causes the inner I/O connector of the second communication adapter to connect to a particular second signal converter of the plurality of second signal converters, the particular second signal converter compatible with a communication protocol of the second communication adapter,
wherein coupling or decoupling the first communication adapter and the second communication adapter to the cryptographic core device does not trigger the breach condition of the tamper boundary.

2. The cryptographic communication system of claim 1, wherein the cryptographic core device further includes a first common communication interface between the plurality of first signal converters and the cryptographic module such that data exchanged across the first common communication interface between each of the plurality of first signal converters and the cryptographic module is in a first common format,
wherein, optionally, the cryptographic core device further includes a second common communication interface between the plurality of second signal converters and the cryptographic module such that data exchanged across the second common communication interface between each of the plurality of second signal converters and the cryptographic module is in a second common format.

3. The cryptographic communication system of claim 1 or 2, wherein the first communication adapter includes attachment mechanisms that interface with the first adapter receptacle and the second communication adapter includes attachment mechanisms that interface with the second adapter receptacle, wherein:
optionally, the first adapter receptacle is equivalent to the second adapter receptacle,
optionally, the first communication adapter and the second communication adapter have identical physical structures but different inner I/O connector configurations.

4. The cryptographic communication system of any of the preceding claims, wherein the first communication adapter and the second communication adapter do not provide cryptographic functionality.

5. The cryptographic communication system of any of the preceding claims, wherein the housing of the first communication adapter further includes an alignment mechanism that interfaces with the first adapter receptacle to ensure that the inner I/O connector of the first communication adapter connects to the particular first signal converter of the plurality of first signal converters and the alignment mechanism does not extend to or through the tamper boundary,
wherein, optionally, the housing of the second communication adapter further includes an alignment mechanism that interfaces with the second adapter receptacle to ensure that the inner I/O connector of the second communication adapter connects to the particular second signal converter of the plurality of second signal converters and the alignment mechanism does not extend through the tamper boundary.

6. The cryptographic communication system of any of the preceding claims, wherein the cryptographic core device further comprises a power adapter formed by the enclosure that physically separates the first adapter receptacle and the second adapter receptacle,
wherein, optionally, the power adapter forms a protrusion between the first adapter receptacle and the second adapter receptacle to physically separate the first communication adapter from the second communication adapter when connected to the cryptographic core device.

7. A cryptographic communication assembly comprising:
a plurality of communication adapters each having a housing, an outer I/O connector configured to connect to a network, and an inner I/O connector that partially protrudes from the housing on a side opposite the outer I/O connector, each of the plurality of communication adapters configured for a different type of signal; and
a cryptographic core device comprising:
an enclosure forming a first adapter receptacle and a second adapter receptacle, each of the first adapter receptacle and the second adapter receptacle including a physical opening through which respective inner I/O connectors pass and configured to interface with any of the plurality of communication adapters;
a plurality of first signal converters housed within the enclosure and configured to connect to an inner I/O connector of a communication adapter of the plurality of communication adapters when the communication adapter is mated with the first adapter receptacle;
a plurality of second signal converters housed within the enclosure and configured to connect to an inner I/O connector of a communication adapter of the plurality of communication adapters when the communication adapter is mated with the second adapter receptacle;
a cryptographic module housed within the enclosure, the cryptographic module configured to provide cryptographic functionality to the cryptographic core device by encrypting and decrypting data signals between the plurality of first signal converters and the plurality of second signal converters; and
a tamper boundary comprising a detectable boundary that triggers a breach condition responsive to unauthorized penetration of the detectable boundary,
wherein each communication adapter is configured such that physically coupling a communication adapter to the cryptographic core device causes the respective inner I/O connector to connect to a particular signal converter of the plurality of first signal converters or the plurality of second signal converters,
wherein coupling or decoupling a communication adapter of the plurality of communication adapters to the cryptographic core device does not trigger the breach condition of the tamper boundary.

8. The cryptographic communication assembly of claim 7, wherein the cryptographic core device further includes a power adapter formed by the enclosure that physically separates the first adapter receptacle and the second adapter receptacle,
wherein, optionally, the power adapter forms a protrusion between the first adapter receptacle and the second adapter receptacle to physically separate a first communication adapter from a second communication adapter when connected to the cryptographic core device.

9. The cryptographic communication assembly of claim 7 or 8, wherein the cryptographic core device further includes:
a first common communication interface between the plurality of first signal converters and the cryptographic module such that data exchanged across the first common communication interface between each of the plurality of first signal converters and the cryptographic module is in a first common format; and
a second common communication interface between the plurality of second signal converters and the cryptographic module such that data exchanged across the second common communication interface between each of the plurality of second signal converters and the cryptographic module is in a second common format.

10. The cryptographic communication assembly of claim 7, 8 or 9, wherein one or more communication adapters of the plurality of communication adapters are configured to connect to a plaintext network and one or more communication adapters of the plurality of communication adapters are configured to connect to a ciphertext network.

11. The cryptographic communication assembly of claims 7 to 10, wherein each communication adapter of the plurality of communication adapters has a common physical design that can be interchangeably coupled to the first adapter receptacle and to the second adapter receptacle,
wherein, optionally, each communication adapter of the plurality of communication adapters has a different physical configuration for the inner I/O connector to couple to a targeted signal converter of the plurality of first signal converters or a targeted signal converter of the plurality of second signal converters.
wherein, optionally, each communication adapter of the plurality of communication adapters further includes an alignment mechanism to ensure that the inner I/O connector is coupled to the targeted signal converter when the communication adapter is mated to the first adapter receptacle or to the second adapter receptacle.

12. The cryptographic communication assembly of any of claims 7 to 11, wherein:
changing the communication adapter that is coupled to the cryptographic core device changes a communication protocol of the cryptographic core device; and/or
each communication adapter is physically configured to connect the inner I/O connector to a targeted signal converter of the plurality of first signal converters or of the plurality of second signal converters while each communication adapter is physically configured to mate with the first adapter receptacle or the second adapter receptacle in identical fashions.

13. A method for assembling a cryptographic communication system using interchangeable communication adapters, the method comprising:
selecting a first communication adapter having a housing, an outer I/O connector configured to connect to a ciphertext network, and an inner I/O connector;
selecting a second communication adapter having a housing, an outer I/O connector configured to connect to a plaintext network, and an inner I/O connector;
coupling the first communication adapter to a first adapter receptacle of a cryptographic core device, thereby coupling the inner I/O connector of the first communication adapter to a particular first signal converter of a plurality of first signal converters of the cryptographic core device; and
coupling the second communication adapter to a second adapter receptacle of the cryptographic core device, thereby coupling the inner I/O connector of the second communication adapter to a particular second signal converter of a plurality of second signal converters of the cryptographic core device,
wherein the first communication adapter is configured such that physically coupling the first communication adapter to the cryptographic core device causes the respective inner I/O connector to connect to the particular first signal converter of the plurality of first signal converters,
wherein the second communication adapter is configured such that physically coupling the second communication adapter to the cryptographic core device causes the respective inner I/O connector to connect to the particular second signal converter of the plurality of second signal converters,
wherein coupling or decoupling the first communication adapter and the second communication adapter to the cryptographic core device does not trigger a breach condition of a tamper boundary of the cryptographic core device.

14. The method of claim 13, further comprising:
coupling the ciphertext network to the first communication adapter; and
coupling the plaintext network to the second communication adapter, wherein the method optionally further comprises:
receiving signals from the ciphertext network and sending the received signals to the first communication adapter that are then decrypted by a cryptographic module of the cryptographic core device through connection with the particular first signal converter of the plurality of first signal converters; and
transmitting signals to the plaintext network by receiving decrypted signals from the cryptographic module through the particular second signal converter of the plurality of second signal converters;
wherein the method optionally further comprises:
receiving signals from the plaintext network and sending the received signals to the second communication adapter that are then encrypted by a cryptographic module of the cryptographic core device through connection with the particular second signal converter of the plurality of second signal converters; and
transmitting signals to the ciphertext network by receiving encrypted signals from the cryptographic module through the particular first signal converter of the plurality of first signal converters.

15. The method of claim 13 or 14, further comprising:
exchanging the first communication adapter with a third communication adapter having a housing, an outer I/O connector configured to connect to the ciphertext network, and an inner I/O connector; and
coupling the third communication adapter to the first adapter receptacle of the cryptographic core device, thereby coupling the inner I/O connector of the third communication adapter to a particular first signal converter of a plurality of first signal converters of the cryptographic core device.
wherein the method optionally further comprises:
exchanging the first communication adapter with the third communication adapter changes a communication protocol of the cryptographic core device; and/or
exchanging the first communication adapter with the third communication adapter does not trigger the breach condition of the tamper boundary.
